# EUROPEAN PATENT APPLICATION

(11) **EP 2 754 895 A1**
(43) Date of publication of application: **16.07.2014**
(21) Application number: 14397501.9
(22) Date of filing: 03.01.2014
(51) Int. Cl.: F04C 11/00, F16H 57/04

(54) **Pump unit for a scavenging system**

(30) Priority: 10.01.2013 FI 20135029
(71) Applicant: John Deere Forestry Oy, 33100 Tampere (FI)
(72) Inventor: Hankamäki, Olli, 37420 VALKKINEN (FI)
(74) Representative: Tampereen Patenttitoimisto Oy

(57) **Abstract**

The invention relates to a pump unit (30) of a fluid circulation system of a drive assembly, the pump unit (30) comprising at least a hydraulic motor (33), a pump (36), and a separate reservoir (41). Fluid is pumped through the motor (33) from the separate reservoir (41) to the drive assembly by a pump outside the pump unit (33). By means of the pressure generated in the motor by the external pump, the motor (33) mechanically controls the pump (36) to draw fluid from the drive assembly to the separate tank (41). The invention also relates to an electric motor and a forest machine which comprise a pump unit according to the invention.

## Description

### Field of the invention

The present invention relates to a pump unit for a scavenging system in a drive assembly, particularly a pump unit for a scavenging system in a hub motor.

### Background of the invention

Various pump systems have been developed for motors of vehicles, such as hub motors placed at the ends of wheels, the pump systems being integrated in the structures of the motors. Among other things, the integrated pump systems supply the motors with hydraulic fluid. One such solution is disclosed in the publication WO 2009135032, in which the pump is placed inside the hub motor. The pump inside the hub motor is configured to lubricate the cog wheels of the motor. The pump system presented in the publication is mechanically coupled to the vehicle, wherein the speed and the coveracity of the pump to supply and discharge fluid can be adjusted according to the travel speed of the vehicle and the rotation speed of the diesel engine. The driver controls the rotation speed of the diesel engine and thereby also the travel speed by means of e.g. a pedal. It is stated that the control based on the travel speed of the vehicle guarantees sufficient lubrication for the cog wheels.

### Brief summary of the invention

The invention is characterized in what will be presented in the independent claims, and the dependent claims relate to advantageous embodiments of the invention.

It is an aim of the present invention to provide a pump unit for a fluid circulation system in a drive assembly, which pump unit is powered by the pressure of oil flowing through the pump unit and which pump unit can be placed in any location on the path of the oil hose. The rotation speed of the pump unit is adjustable, and its rotation is stoppable.

The invention relates to a pump unit for a fluid circulation system in a drive assembly. The pump unit for the drive assembly comprises at least one hydraulic motor, a pump, and a separate reservoir. Fluid is pumped from a separate reservoir through the motor to the drive assembly by a pump outside the pump unit, and by means of the pressure generated in the motor by the pump, the motor controls the pump mechanically to draw fluid from the drive assembly to the separate reservoir. By means of the pressure generated in the motor by the external pump, the motor controls the pump mechanically to draw fluid from the drive assembly to the separate reservoir.

In an advantageous embodiment, the fluid drawn by the pump unit is oil. In another advantageous embodiment, the motor and the pump of the pump unit constitute a Gerotor or an internal gear pump structure. In yet another advantageous embodiment, the pump unit is placed outside the drive assembly. In yet another advantageous embodiment, the drive assembly and the reservoir are interconnected via an air equalizer hose. In yet another advantageous embodiment, the drive assembly is a hub motor and the pump unit is connected to the cover of the hub motor. In yet another advantageous embodiment, the housing of the pump unit constitutes a part of the hub motor cover. In yet another advantageous embodiment, the pump unit further comprises a separate pump connected between the motor and the reservoir. In yet another advantageous embodiment, the separate pump is further connected to at least one other hydraulic motor.

Furthermore, the invention relates to an electric motor comprising a pump unit according to any of the above mentioned embodiments. In an advantageous embodiment, the electric motor is a hub motor of a wheel of a forest machine or some other vehicle comprising a wheel-specific driveline unit.

Moreover, the invention relates to a forest machine comprising a pump unit according to an embodiment of the pump unit. In an advantageous embodiment, the forest machine is a harvester, a forwarder, a loader, or a crawler.

### Description of the drawings

In the following, the present invention will be described in more detail with reference to the appended drawings, in which
Fig. 1 shows a loader, in which it is possible to apply a pump unit according to an embodiment of the invention for the scavenging system of the drive assembly,
Fig. 2 shows hydrostatic driveline equipment typically used in forest machinery, in which it is possible to apply a pump unit according to an embodiment of the invention for the scavenging system of the drive assembly; and
Fig. 3 shows an exploded view of a pump unit according to an embodiment of the invention, for the fluid circulation system of the drive assembly, fastened to a hub motor cover.

### Detailed description of the invention

A pump unit according to the invention for the scavenging system, *i.e.* the fluid circulation system, of a drive assembly, for example a pump unit for the scavenging system of a hub motor, is powered by the pressure of oil flowing through it, so that the pump unit can be placed at any point along the oil hose. If the pump unit is powered by an oil pump rotated by an electric motor, the flow in the pump unit can be adjusted by changing the rotation speed of the electric motor, or the flow can even be stopped completely. It is also possible to adjust the rotation speed of the pump unit and to stop the rotation, *i.e*. to stop the flow, by using an adjustable-volume oil supply pump. Another advantageous alternative is a constant-volume oil pump connected to a diesel engine. A constant-volume oil pump can be stopped by guiding the flow back to the oil reservoir (past the pump units) or by applying a release switch. Stopping the pump units when no cooling is needed makes it possible to save energy. The pump unit according to the invention can be placed, for example, in the motor cover or on a bogie, wherein the pump unit can be easily removed, repaired, and/or replaced.

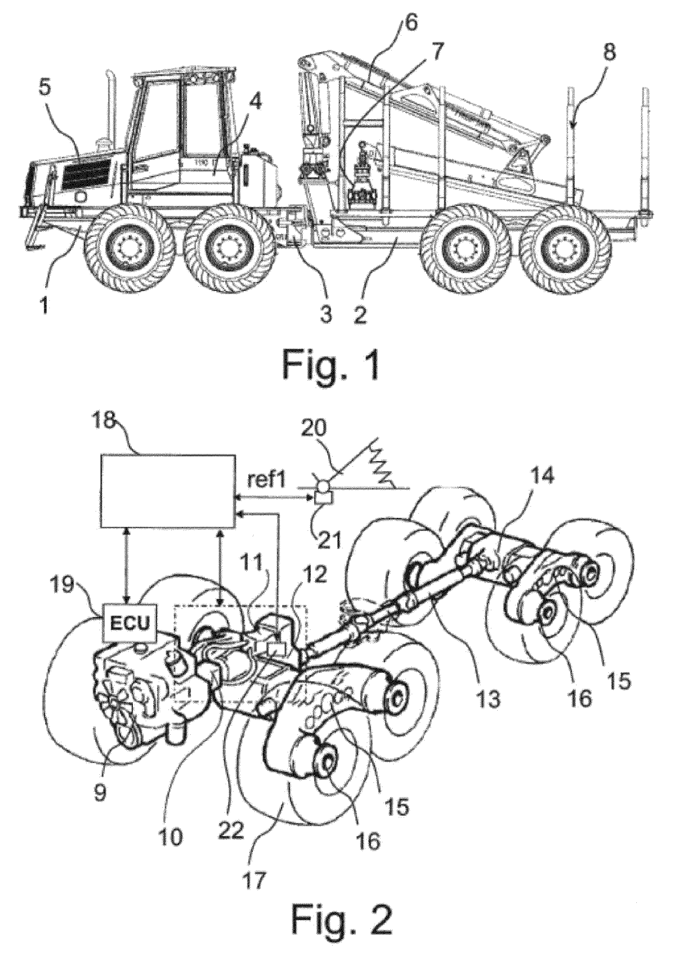

Figure 1 shows a loader, in which it is possible to apply a pump unit according to the invention for a fluid circulation system of a drive assembly, that is, for example a wheel-specific oil scavenging system of the driveline unit, *i.e.* the hub motor. The pump unit according to the invention can also act as a common pump unit for the hub motors of two or more, for example 8 wheels. The fluid circulation system can be applied for cooling and also lubricating, *inter alia,* the drive assembly, for example the motor, and also for lubricating e.g. the gearings.

The loader comprises a front frame 1 and a rear frame 2 which are interconnected by means of a frame joint 3. The front frame 1 comprises a cabin 4 and a power source 5, and the rear frame 2 comprises a boom 6 with a grapple 7 and a load space 8. Each frame comprises a two-wheeled rocking shaft, a bogie, but in the front frame, a possible alternative is to use a normal single-wheel shaft with a large wheel.

As shown in Fig. 2, a hydrostatic driveline is normally applied in forest machines, and it is applied in the loader of Fig. 1, too. The driveline converts the mechanical power supplied by a diesel engine 9 to hydraulic power in a pump 10, wherein the power is proportional to the feed pressure and the volume flow of the pump 10. The pump 10 is adjustable, wherein the volume flow can be varied. The hydraulic power is utilized in a motor 11 which, in turn, generates a torque and a rotating speed for an output shaft. The rotation speed of the motor 11 depends on the volume flow and on the setting of the motor 11. The motor 11, in turn, is coupled to a gear 12 (fast/slow), by means of which the mechanical power is transferred to the wheels 17 of the working machine, for example by means of cardan transmission 13 and differential shafts 14 to two-wheeled rocking shafts or bogies 15 equipped with the wheels 17 of the working machine which are mounted on rotating hubs 16. A balanced planetary transmission is typically provided inside the bogie 15. The driving speed is typically controlled in a stepless manner. To increase the speed, the volume flow produced by the pump 10 is increased.

For controlling forest machines, a control system can be used which controls, among other things, the diesel engine, the hydrostatic driveline, and the crane system, on which the harvester head or grapple is mounted, as well as all the auxiliary functions related to these. Said control system operates, for example, in a PC operating environment.

The hydrostatic driveline is controlled by the electronic control system 18 of the working machine which also controls the diesel engine 9 by means of an electronic control unit (ECU) 19. The control bus of the control system typically applies a CAN bus, and the control system 18 typically consists of independent smart modules whose operation is controlled by means of control panels and other equipment (a central processing unit, a display, a keyboard, etc.) placed within the reach of the driver. The control system is also connected to a sensor 22 which gives out a signal that is proportional to the distance travelled by the wheel 17. The operation of the sensor 22 is based on, for example, monitoring the rotation of the hub 16, but with respect to the sensor, it is also possible to apply other principles known as such. The sensor 22, which is for example a pulse sensor, is typically placed in the motor 11.

The rotation speed of the diesel engine 9 and the driving speed are determined by a control value (ref1) given by the driver, typically by using a pedal 20. By means of a sensor 21, the pedal provides the control system with a signal that is dependent on the position of the pedal 20. The reference value can also be given in other ways, for example by using a manual control stick. The position of the pedal 20 controls the volume flow produced by the pump 10. The dependence between the rotation speed or the driving speed and the control value is typically linear. The driving speed is also influenced by the use of a so-called reducing gear. According to prior art, the reducing gear is a mode of the control system that can be selected by the operator and to which is related either a fixed or settable parameter of the control system, representing the control value.

The hydrostatic driveline of the machine can be implemented by wheel-specific hub motors, for example electric motors. The torque of the hub motors is transmitted to the traction wheels by means of e.g. planetary gears. However, it is also possible to use a different transmission ratio or direct drive as the transmission between the electric motor used as the hub motor, and the wheels. The pump unit according to the invention for the oil scavenging system of a hub motor, configured for cooling of the hub motor, can be placed e.g. on the cover of the hub motor of a wheel 17, but also, for example, in the housing of the electric motor used as the hub motor, in the frame of the diesel engine 9 of the machine, in a two-wheel bogie structure 15, or in any other suitable place. However, it is advantageous to place the pump unit as close to the hub motor being cooled as possible, to secure sufficient pumping coveracity. For example in the case of a wheel-specific pump unit, the cover of a hub motor is an advantageous alternative, because the feed and drain hoses of the pump units can thus be kept as short as possible. On the other hand, if the pump unit is used as a scavenging system for two hub motors, an advantageous location could be the two-wheel bogie structure 15. In particular, the short suction passage of oil and air, that is, a short drain hose, is especially advantageous under freezing cold conditions, in which the circulation of oil may slow down or be suspended.

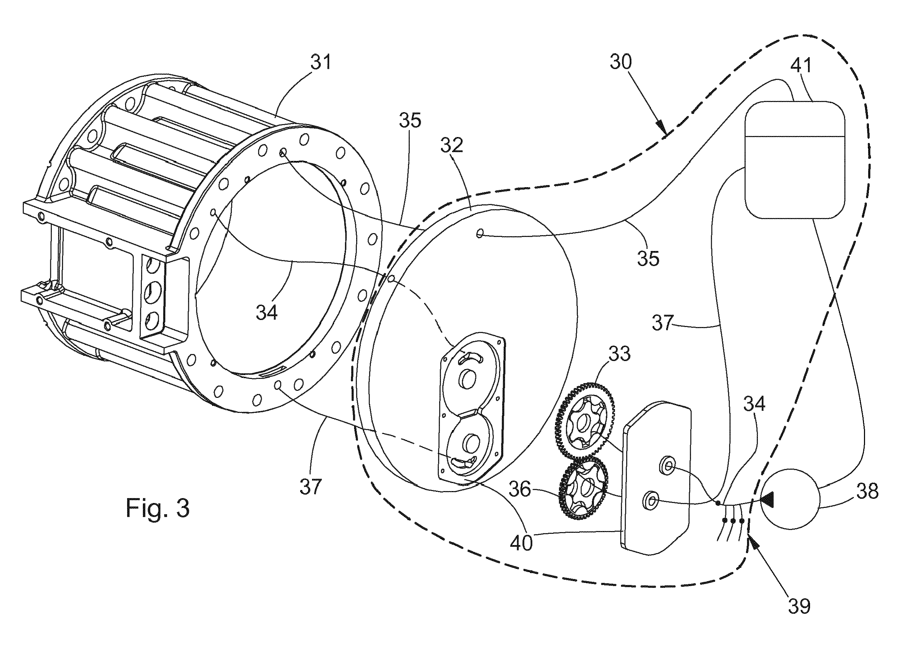

Figure 3 shows an exploded view of a pump unit 30 according to an embodiment of the invention, fastened to the cover 32 of an electric motor 31. The electric motor 31 of the figure can be used, for example, as a wheel-specific hub motor for a forest machine. The pump unit 30 can be used as a so-called scavenging pump which, for cooling the structures of the electric motor 31, supplies oil and air to the structures of the motor 31 and discharges the mixture of oil and air from the structures, that is, acts as a fluid circulation system. The pump unit 30 comprises two cogged wheels; in some cases, the pump unit can be provided with more than two cogged wheels. The larger one of the cogged wheels acts as the motor 33 of the pump unit 30. The motor 33 of the pump unit 30 is a hydraulic motor whose operation can be controlled by a pump 38 outside the pump unit 30. Compressed oil is pumped through the motor 33 of the pump unit 30 to the structures of the electric motor 31. The oil is introduced into the housing structure via an oil feed hose 34 from e.g. a separate reservoir 41. Furthermore, air is introduced via an air equalizer hose 35 into the structures of the electric motor 31, for example from the same reservoir 41 as the oil. However, it is also possible to use another reservoir instead of the reservoir 41. The smaller cogged wheel acts as a pump 36 which is mechanically driven, *i.e.* controlled, by the motor 33 and which is used for pumping the oil-air mixture out of the housing structure via a drain hose 37. The motor 33 can be configured to have a larger diameter, for example 20 to 30 % larger, than the pump 36. Thus, the pump 36 is provided with a higher coveracity than the motor 33, to secure a sufficiently effective removal of oil and air from the housing structure of the electric motor 31. By means of air supplied by the air equalizer hose 35 into the structures of the motor 31, differences in the air pressure can be equalized in the motor structure 31. The differences in the air pressure are caused by the motor 33 and the pump 31 operating at different power inputs.

The pump 38 can be, for example, a separate electric pump for the pump unit 30, a pump driven by the motor of the vehicle, *i.e.* a fuel-driven pump or a piston pump in the vehicle. If a separate electric pump is used as the pump 38, the scavenging system of the pump unit can be used irrespective of whether the vehicle is in use or not. Furthermore, when a separate electric pump 38 is used, the pumping speed can be adjusted as desired or needed, that is, the pumping speed is not dependent on the speed of the vehicle or the rotation speed of the motor of the vehicle. The same pump 38 can be used to drive one or more pump units in addition to the pump unit 30 shown in Fig. 3. All the pump units 30 can be connected to the pump 38 by means of e.g. throttles or volume flow control valves 39. By the throttles or volume flow control valves 39, smooth oil supply can be secured for all the pump units 30 connected to the pump 38.

The motor 33 and the pump 36 make up a cogged wheel structure which may be, for example, a Gerotor or an internal gear pump or a low pressure pump structure. The cogged wheel structures of the pump unit 30, the motor 33 and the pump 36, can also be encapsulated 40. The drain hose 37 is advantageously placed in that part of the hub motor (or another motor or gearing), in which the mixture of air and oil accumulates by the effect of gravity and from which the mixture of air and oil is to be discharged. Most typically, this part is the bottom of the hub motor.

When the pump unit 30 is connected to the cover 32 of the electric motor 31, the cover can be provided with a recess for the cogged wheel structure. Thus, the cogged wheel structure does not remain elevated above the cover structure 32. Furthermore, through holes can be provided in the cover 32 for the hoses 34, 35, 37, via which oil, air and oil-air mixture can be conveyed to and from the structures of the motor. By means of the through holes, it is possible to minimize the length of the hoses 34, 35, 37 and the number of hose components needed. Furthermore, the pump unit 30 placed in the cover 32 can be easily removed, repaired and/or replaced with another pump unit, contrary to a pump unit placed, for example, inside the structures of the motor.

The supply air hose and the oil feed hose can take the air and oil supplied by them into the drive assembly from, for example, a separate reservoir 41. The drain hose 37 can also be controlled to convey the oil-air mixture drawn from the structure of the motor to the same separate reservoir 41. Thus, the drive assembly and the reservoir are connected together via the hoses 34, 35, 37. The separate reservoir 41 can be a reservoir provided by design, a transmission housing, or any other structure suitable for storing fluid and air.

The cogged wheel structures of the pump unit according to the invention, the motor and the pump, can be made of for example steel, aluminium or powder metal. The housing 40 of the pump unit 30 can be made of for example aluminium, steel, or cast iron.

Pump units according to the invention can be used not only in loaders and forest machines, such as a forwarder and a harvester, but also in any other off-road vehicle.

In addition to cooling the motor, pump units according to the invention can be used for circulating oil or another fluid not only in an electric hub motor but also in other drive assemblies, such as a dry sump motor, and gearboxes, such as dry sump gearboxes.

The pump unit according to the invention can also be used in connection with another fluid than oil; in other words, the invention is not limited to oil pump units.

It is obvious that the invention is not limited to some embodiments presented above, but it can vary within the scope of the appended claims.

## Claims

1. A pump unit for the fluid circulation system of a drive assembly, which pump unit (30) comprises at least a hydraulic motor (33), a pump (36) and a separate reservoir (41), fluid being pumped through the motor (33) from the separate reservoir (41) to the drive assembly by a pump (38) outside the pump unit (30), and the motor (33) mechanically controlling the pump (36) to draw fluid from the drive assembly to the separate reservoir (41) by means of pressure generated in the motor (33) by the pump (38).

2. The pump unit according to claim 1, wherein the fluid is oil.

3. The pump unit according to claim 1 or 2, wherein the motor (33) and the pump (36) constitute a Gerotor or an internal gear pump structure.

4. The pump unit according to claim 1, 2 or 3, the pump unit (30) being placed outside the drive assembly.

5. The pump unit according to any of the preceding claims, wherein the drive assembly and the reservoir (41) are connected to each other via an air equalizer hose (35).

6. The pump unit according to any of the preceding claims, wherein the drive assembly is a hub motor (31) and the pump unit (30) is mounted on the cover (32) of the hub motor (31).

7. The pump unit according to claim 6, wherein the housing (40) of the pump unit (30) is integrated in the cover (32) of the hub motor (31).

8. The pump unit according to any of the preceding claims, wherein the pump (38) is coupled between the motor (33) and the reservoir (41).

9. The pump unit according to claim 8, wherein the pump (38) is further coupled to at least one other hydraulic motor.

10. An electric motor comprising a pump unit (30) according to any of the preceding claims 1 to 9.

11. The electric motor according to claim 10, the electric motor being a hub motor of a wheel of a forest machine or another vehicle which comprises a wheel-specific driveline unit.

12. A forest machine comprising a pump unit (30) according to any of the preceding claims 1 to 9.

13. The forest machine according to claim 12, the forest machine being a harvester, a forwarder, a loader, or a crawler.
